# FASCICULE DE BREVET EUROPEEN

(11) **EP 0 599 671 B1**
(45) Date de publication et mention de la délivrance du brevet: **13.12.1995**
(21) Numéro de dépôt: 93402418.3
(22) Date de dépôt: 01.10.1993
(51) Int. Cl.: C08F 297/02, C09J 153/00, C08L 53/00

(54) **Procédé de préparation de copolymères séquences dérivés de diènes conjugués et de méthacrylate de méthyle**
Verfahren zur Herstellung von Blockcopolymeren aus konjugierten Dienen und Methylmethacrylaten
Process for preparing sequenced copolymers derived from conjugated dienes and methyl methacrylate

(30) Priorité: 27.11.1992 FR 9214318
(43) Date de publication de la demande: 01.06.1994
(73) Titulaire: ELF ATOCHEM S.A., 92800 Puteaux (FR)
(72) Inventeur: Wang, Jinshan, B-4000 Liège (BE); Heim, Philippe, F-64000 Pau (FR); Vuillemin, Bruno, F-64000 Pau (FR); Teyssie, Philippe, B-4121 Neuville en Condroz (BE); Bayard, Philippe, B-4970 Stavelot (BE)
(74) Mandataire: Luziau, Nelly

(56) Documents cités:
- WO-A-90/15084
- FR-A- 2 387 255
- GB-A- 1 003 543
- US-A- 3 439 064

## Description

Le procédé selon l'invention concerne la préparation par polymérisation anionique, de copolymères séquencés comprenant des séquences dérivant de diènes conjugués et de méthacrylate de méthyle. Ces copolymères sont élastomères thermoplastiques et ont une tenue à la chaleur améliorée.

Il est connu de préparer des copolymères élastomères thermoplastiques, notamment des SBS (polystyrène-butadiène-styrène) et des SEBS (polystyrène-butadiène hydrogéné-styrène). Cependant, leur température limite d'utilisation est inférieure à 70°C et 80-100°C respectivement. Au delà de ces limites, le produit se ramollit et perd sa forme.

On a cherché à préparer des copolymères élastomères thermoplastiques dont au moins une séquence a une température de transition vitreuse plus élevée. Ainsi, le brevet belge BE-A-759 737 décrit des copolymères élastomères thermoplastiques de formule A-B-C dans laquelle A et/ou C représentent une séquence polymère non élastique dérivée de monomères acryliques et ayant une température de transition vitreuse supérieure à 100°C. Ces séquences ont une masse moléculaire moyenne comprise entre 200 et 20.000, de préférence inférieure à 18.000 et particulièrement inférieure à 15.000 notamment le polyméthacrylate de méthyle (Mn = 1.600 dans le tableau). La séquence B peut dériver d'un diène conjugué comme le butadiène, de préférence du butadiène à teneur élevée en configuration Cis 1,4. Pour la préparation de ces copolymères, par polymérisation anionique, on utilise un amorceur du type alkyllithium, en milieu solvant apolaire comme le cyclohexane.

On a pu noter que, dans ce brevet, les masse moléculaires moyennes des séquences acryliques sont faibles, ce qui présente l'inconvénient de diminuer la résistance mécanique. Ceci peut s'expliquer par le fait que l'efficacité de l'amorçage du méthacrylate de méthyle (MAM), en milieu purement apolaire (cyclohexane) est très faible, même à température très basse (-78°C) et qu'il y a des réactions secondaires dues à l'attaque, par les anions, des groupes esters du monomère MAM présent en solution ou des chaînes polyméthacrylate de méthyle (PMMA) déjà formées. En effet, lorsque le monomère MAM est en présence de l'anion butadiène par exemple, il y a polymérisation, mais l'anion attaque, de préférence, les esters plutôt que la double liaison. On obtient donc une chaîne PMMA courte. En outre, dans ce brevet, il n'est pas fait mention des températures de transition vitreuse (Tg). Dans les conditions de préparation de ces polymères, la séquence PMMA devrait être isotactique et avoir une faible Tg, par exemple 60-70°C.

Dans la demande FR-A-2679237 déposée par la Demanderesse le 19.07.91, on décrit un système d'amorçage pour la polymérisation anionique de monomères (meth)acryliques pour obtenir particulièrement des copolymères séquencés pouvant comprendre des séquences dure-souple-dure et aussi du PMMA contenant un pourcentage élevé de triades syndiotactiques, conférant au polymère une température de transition vitreuse de l'ordre de 130°C. On ne décrit pas de procédé de préparation de copolymères à séquences polyméthacrylate de méthyle et polydiéniques.

Des copolymères à séquences polybutadiène et polyméthacrylate de méthyle syndiotactique ont déjà été obtenus. Cependant, leur préparation nécessite un changement de solvant (toluène puis THF par exemple) et la réaction a lieu à basse température (-78°C). Ces conditions ne conviennent pas à une exploitation industrielle. En outre, l'addition de grandes quantités de THF par exemple après la formation du chaînon vivant polybutadiène, peut entraîner sa désactivation par réaction avec les impuretés résiduelles contenues dans le solvant, ce qui conduit à la formation d'un produit non pur (mélange de copolymère et d'homopolymère.

La présente invention a pour but la préparation par polymérisation anionique de copolymères élastomères thermoplastiques séquencés, comprenant une séquence polydiènique, particulièrement le polybutadiène comprenant une teneur élevée en configuration 1,4 (cis ou trans) et au moins une séquence polyméthacrylate de méthyle présentant une température de transition vitreuse élevée (supérieure ou égale à 120°C, de préférence supérieure à 125°C).

En particulier, ce procédé doit être réalisable d'une manière industrielle, c'est-à-dire notamment à température plus élevée et en tenant compte de l'incompatibilité des solvants pour les polymérisations des diènes, notamment du butadiène, et du méthacrylate de méthyle.

Le procédé, selon l'invention, pour préparer par polymérisation anionique, des copolymères comprenant une séquence polydiénique et au moins une séquence polyméthacrylate de méthyle (PMMA) ayant une température de transition vitreuse supérieure ou égale à 120°C, consiste:
(a) à polymériser le monomère diène conjugué à l'aide d'un amorceur anionique pour obtenir un chaînon polydiénique vivant,
(b) à ajouter ensuite un ligand de formule ROM où M est un métal alcalin et R a la formule R¹(OR²)m dans laquelle R¹ est un radical alkyle linéaire ou ramifié ou un radical arylalkyle, alkylaryle, le radical alkyle ayant de 1 à 6 atomes de carbone, R² est un radical alkylène linéaire ou ramifié ayant de 2 à 4 atomes de carbone et m est le nombre entier 1, 2 ou 3,
(c) à faire réagir le chaînon polydiénique vivant du milieu réactionnel (b) avec le monomère MAM pour former un copolymère vivant,
(d) à faire réagir le copolymère vivant obtenu à l'étape (c) avec au moins un composé protonique,
   avec la condition que la polymérisation des monomères diène et MAM ait lieu uniquement en présence de solvant apolaire.

Comme monomère diène conjugué, on peut utiliser des diènes substitués ou non ayant de 4 à 12 atomes de carbone et particulièrement l'isoprène, le diméthylbutadiène et le butadiène. On préfère utiliser le butadiène.

Les amorceurs peuvent être choisis parmi les amorceurs usuels pour la polymérisation anionique. Ils peuvent être, par exemple, monofonctionnels ou bifonctionnels, permettant d'obtenir des copolymères bi- ou triséquencés.

Les amorceurs monofonctionnels sont généralement des composés organométalliques dérivés de métaux alcalins ou alcalino-terreux et dont le radical organique est un alkyle, aryle, arylalkyle, particulièrement le diphénylméthylsodium, le diphénylméthylpotassium, le diphénylméthyllithium, le n-butyllithium, le secbutyllithium, le n-butylsodium, le 1,1-diphénylhexyllithium et le 1,1-diphényl-3-méthylpentyllithium.

Les amorceurs bifonctionnels peuvent être choisis, par exemple, parmi le 1,1,4,4-tétraphényl-1,4-dilithiobutane, le 1,1,4,4-tétraphényl-1,4-disodiobutane. On peut aussi les choisir parmi les produits de réaction d'un alkyllithium, comme le butyllithium, avec le disopropénylbenzène (DIB), les bis (p-isopropénylphényl) alkanes, les 2(n-1)-diphényl-alkadiènes ou tout autre composé décrit dans le brevet US-A-4,200,718.

Comme ligands de formule indiquée précédemment, on peut utiliser ceux correspondant à cette formule dans laquelle R¹ peut être un radical méthyle, éthyle, butyle, benzyle, et de préférence méthyle, R² peut être le radical éthylène, propylène, butylène, isopropylène, de préférence éthyléne, M est le lithium, le sodium ou le potassium, de préférence le lithium et m est égal de préférence à 2. On peut utiliser particulièrement le méthoxyéthanolate de lithium, le méthoxyéthoxy-éthanolate de lithium.

Le rapport molaire du ligand à l'amorceur peut varier dans des limites très larges. La quantité de ligand dépend de l'amorceur et du ou des monomère(s) à polymériser. Le rapport molaire ligand/amorceur pour réaliser l'invention peut être compris entre 1 et 50, et de préférence entre 1 et 10.

Comme solvants, on peut utiliser tout solvant apolaire, notamment toluène, benzène, éthylbenzène. Il est possible d'utiliser un mélange de ces solvants. Ces solvants peuvent aussi être associés à du cyclohexane, particulièrement lorsque l'on prépare in situ l'amorceur. Dans ce cas, il est préferable d'utiliser le minimum de cyclohexane puisque, comme indiqué précedemment, la polymérisation du MAM en présence de cyclohexane est difficile à contrôler.

Selon un mode de réalisation préféré, on peut ajouter lors de l'étape (a) de polymérisation du diène conjugué ou de l'étape (b) lors de l'addition du ligand, un composé du type diphényléthylène (DPE) ou α-méthylstyrène. Ceci permet d'éviter les réactions secondaires entre la fonction ester du MAM et le carbanion obtenu à l'étape (a).

La température de polymérisation du diène conjugué peut varier entre 0°C et 100°C et, de préférence, entre 0°C et 70°C. Celle de la polymérisation du monomère MAM varie entre -50°C et +60°C et elle est, de préférence, située entre -30°C et +20°C.

La durée de polymérisation du diène conjugué dépend de la température et de la concentration en monomère et amorceur et peut varier, par exemple, entre 0,5 et 24 heures et, de préférence, entre 0,5 h et 5 h. Celle de la polymérisation du MAM est très courte et peut varier par exemple entre 10 s et 1 heure, et de préférence entre 1 min et 15 min.

Le composé protonique ajouté en fin de polymérisation pour désactiver le copolymère, peut être choisi notamment parmi l'eau, les alcools, les acides : on utilise particulièrement le méthanol acidifié.

On peut alors réduire au moins partiellement l'insaturation résiduelle de la séquence polydiène par des techniques d'hydrogénation usuelles afin d'améliorer ses propriétés, notamment la stabilité à la lumière ultraviolette.

Pour récupérer le copolymère, on peut le faire précipiter dans du méthanol et sécher sous vide à température ambiante. On l'obtient alors sous forme de granulés ou de poudre.

Le copolymère obtenu a une masse moléculaire moyenne en nombre directement proportionnelle au rapport masse monomère/amorceur.

Les polymères obtenus par le procédé selon l'invention comprennent:
- une séquence polybutadiène de masse moléculaire moyenne en nombre comprise entre 5 000 et 500 000 et de préférence entre 9 000 et 150 000 et dont la teneur en configuration 1,4 (cis ou trans) est supérieure à 75 % et de préférence supérieure ou égale 80 %, leur température de transition vitreuse inférieure à -25°C et de préférence comprise entre -75°C et -90°C,
- au moins une séquence PMMA de masse moléculaire moyenne en nombre comprise entre 5000 et 500.000, et particulièrement entre 7 000 et 200 000. La séquence PMMA comprend un pourcentage de triades syndiotactiques supérieur ou égal à 75 %. La température de transition vitreuse est supérieure à 120°C, particulièrement supérieure à 125°C. Le copolymère présente de bonnes propriétés élastomères et une bonne tenue à la chaleur.

Les copolymères obtenus par le procédé selon l'invention peuvent être traités par des procédés utilisés habituellement pour les matériaux thermoformables, par exemple, le moulage par extrusion ou injection, pour obtenir des articles comme fibres, revêtements, chaussures. Ils peuvent aussi former des adhésifs sensibles à la pression. On peut aussi les utiliser comme agents pouvant améliorer la résistance au choc de divers autres polymères, comme le polyméthacrylate de méthyle, le polystyrène, le polychlorure de vinyle, le polycarbonate. On peut aussi les associer à des agents de renforcement comme plastifiants, stabilisateurs, colorants, charges.

Tous ces produits sont particulièrement intéressants pour, notamment, leur bonne tenue à la chaleur, les rendant appropriés à toute utilisation devant les soumettre à des températures élevées.

Les exemples suivants, non limitatifs, illustrent l'invention.

### Exemple 1 : Copolymère biséquencé polybutadiène-b-PMMA

Dans 150 ml de toluène préalablement purifié, on ajoute à 0°C, 5.10⁻⁴ mole de sec-butyllithium, puis 0,09 mole de butadiène. On laisse polymériser pendant 24 heures.

On refroidit le mélange réactionnel à -30°C et on ajoute 5.10⁻³ mole de méthoxyéthoxyéthanolate de lithium et 5.10⁻⁴ mole de diphényléthylène, dilués dans 15 ml de toluène. Une coloration rouge foncé apparaît.

Après 15 min, on ajoute 0,05 mole de MAM préalablement distillé en présence de triéthylaluminium. On stoppe la réaction au bout de 15 min par ajout de 1 ml d'un mélange (50/50 en volume) de méthanol et d'acide chlorhydrique.

On précipite le copolymère dans du méthanol. Après séchage sous vide, à température ambiante, on obtient le copolymère avec un rendement de 98 %.

### L'analyse montre les caractéristiques suivantes:

### ■ Séquence polybutadiène (analyse effectuée sur la séquence avant addition de MAM)

- Mn = 19400 (obtenue en GPC par rapport aux étalons polystyrène)
- Indice de polydispersité (IP) = 1,1
- Microstructure : 86 % Cis ou trans
   14 % vinyle
- Tg = -78°C

### ■ Copolymère séquencé Polybutadiène-PMMA:

- Mn = 28700 (obtenue en GPC par rapport aux étalons polystyrène)
- Indice de polydispersité (IP) = 1,1
- tacticité

| | |
|---|---|
| triades syndiotactiques : | 80 % |
| triades hétérotactiques : | 20 % |
| triades isotactiques : | 0 % |

- Tg = 130°C

### Exemple 2 : Copolymère biséquencé polybutadiène-b-PMMA

Dans un litre de toluène préalablement séché sur CaH₂, on ajoute, à 30°C, 7,5.10⁻⁴ mole de Sec-butyllithium, puis 7,5.10⁻³ mole d'α-méthystyrène. On ajoute ensuite 1,1 mole de butadiène et on laisse polymériser pendant 2 h 30 min. Après avoir baissé la température du milieu réactionnel a 0°C, on ajoute 7,5.10⁻³ mole de méthoxyéthoxyéthanolate de lithium dilué dans 50 ml de toluène.

On ajoute alors 0,4 mole de MAM. On stoppe la réaction après 15 min par addition de 1 ml de méthanol acidifié.

On précipite le copolymère dans du méthanol. Après séchage sous vide à température ambiante, on obtient le copolymère avec un rendement de 95 %.

### L'analyse montre les caractéristiques suivantes :

### ■ Séquence polybutadiène (analyse effectuée sur la séquence avant addition de MAM)

- Mn = 150 000 (obtenue en GPC par rapport aux étalons polystyrène)
- Indice de polydispersité (IP) = 1,15
- Microstructure : 80 % Cis ou trans
   20 % vinyle
- Tg = -76°C

### ■ Copolymère séquencé Polybutadiène-PMMA :

- Mn = 173.000 (obtenue en GPC par rapport aux étalons polystyrène)
- Indice de polydispersité (IP) = 1,2
- tacticité

| | |
|---|---|
| triades syndiotactiques : | 77 % |
| triades hétérotactiques : | 22 % |
| triades isotactiques : | 1% |

- Tg = 128°C

### Exemple 3 : Copolymère triséquencé PMMA-polybutadiène-PMMA

Dans 70 ml de cyclohexane préalablement distillé sur polystyryl lithium, on ajoute 4,6.10⁻⁴ mole de diisopropénylbenzène (DIB) comme amorceur bifonctionnel, puis 9,24.10⁻⁴ mole de Sec-Butyllithium. Le mélange réactionnel est chauffé à 50°C pendant 2 heures.

On ajoute ensuite 500 ml de toluène préalablement distillé sur polystyryllithium. La température du milieu réactionnel est portée à 0°C. On ajoute alors 0,3 mole de butadiène que l'on laisse polymériser pendant 24 heures.

9,24.10⁻⁴ mole de diphényléthylène et 9,24.10⁻³ mole de méthoxyéthoxy éthanolate de lithium, dilués dans 25 ml de toluène, sont ajoutés au milieu réactionnel. On refroidit le mélange à -30°C et on ajoute 0,047 mole de MAM distillé sur triéthylaluminium.

Après 15 min, la réaction est arrêtée par addition de 1 mi de méthanol acidifié.

On précipite le mélange dans le méthanol. Après séchage sous vide à température ambiante, on récupère le copolymère triséquencé avec un rendement de 100 %.

### L'analyse montre les caractéristiques suivantes :

### ■ Séquence polybutadiène (analyse effectuée sur la séquence avant addition de MAM)

- Mn = 77.000 (obtenue en GPC par rapport aux étalons polystyrène)
- Indice de polydispersité (IP) = 1,12
- Microstructure : 90 % Cis ou trans
   10 % vinyle
- Tg = -82°C

### ■ Copolymère séquencé Polybutadiène-PMMA :

- Mn = 127.000 (obtenue en GPC par rapport aux étalons polystyrène)
- Indice de polydispersité (IP) = 1,17
- tacticité

| | |
|---|---|
| triades syndiotactiques : | 78 % |
| triades hétérotactiques : | 22 % |
| triades isotactiques : | 0% |

- Tg = 128°C

## Revendications

1. Procédé pour préparer, par polymérisation anionique, des copolymères comprenant une séquence dérivant de diènes conjugués et au moins une séquence polyméthacrylate de méthyle ayant une température de transition vitreuse supérieure ou égale à 120°C, caractérisé en ce que :
a) on polymérise le monomère diène conjugué à l'aide d'un amorceur anionique, pour obtenir un chaînon polydiénique vivant,
b) on ajoute ensuite un ligand de formule ROM dans laquelle M est un métal alcalin et R a la formule R¹(OR²)m dans laquelle R¹ est un radical alkyle linéaire ou ramifié, un radical arylalkyle ou alkylaryle, le groupe alkyle ayant de 1 à 6 atomes de carbone, R² est un radical alkylène linéaire ou ramifié ayant de 2 à 4 atomes de carbone et m est le nombre entier 1, 2 ou 3,
c) on fait réagir le chaînon polydiénique vivant du milieu réactionnel (b) avec le méthacrylate de méthyle (MAM) pour former un copolymère vivant,
d) on fait réagir le copolymère vivant obtenu à l'étape (c) avec au moins un composé protonique,
avec la condition que la polymérisation des monomères diène et MAM ayant lieu uniquement en présence de solvant apolaire.

2. Procédé conforme à la revendication 1, caractérisé en ce que l'amorceur anionique est mono ou bifonctionnel.

3. Procédé conforme à l'une des revendications 1 ou 2, caractérisé en ce qu'on ajoute à l'étape (a) ou (b) de l'α-méthylstyrène ou du diphényl éthylène.

4. Procédé conforme à l'une quelconque des revendications 1 à 3, caractérisé en ce qu'on utilise du butadiène comme monomère diène conjugué.

5. Procédé conforme à l'une quelconque des revendications 1 à 4, caractérisé en ce qu'on utilise comme ligand le méthoxyéthanolate de lithium ou le méthoxyéthoxyéthanolate de lithium.

6. Procédé conforme à la revendication 2, caractérisé en ce qu'on utilise comme amorceur monofonctionnel un composé choisi parmi le diphénylméthylsodium, le diphénylméthylpotassium, le diphénylméthyllithium, le n-butyllithium, le secbutyllithium, le n-butylsodium, le 1,1-diphénylhexyllithium et le 1,1-diphényl-3-méthylpentyllithium.

7. Procédé conforme à la revendication 2, caractérisé en ce qu'on utilise comme amorceur bifonctionnel un composé choisi parmi le 1,1,4,4-tétraphényl-1,4-dilithiobutane, le 1,1,4,4-tétraphényl-1,4-disodiobutane, le produit de réaction d'un alkyllithium avec le diisopropénylbenzène, les bis- (p-isopropénylphényl) alkanes et les 2 (n-1)-diphénylalkadiènes.

8. Procédé conforme à l'une quelconque des revendications 1 à 7, caractérisé en ce qu'on utilise comme solvant du toluène, du benzène, de l'éthylbenzène ou un mélange d'un de ces derniers avec du cyclohexane.

9. Procédé conforme à l'une quelconque des revendications 1 à 8, caractérisé en ce que la polymérisation du diène conjugué a lieu entre 0°C et 100°C, et de préférence entre 0°C et 70°C et la polymérisation du méthacrylate de méthyle a lieu entre -50°C et +60°C et, de préférence, entre -30°C et +20°C.

10. Procédé conforme à l'une quelconque des revendications 1 à 9, caractérisé en ce que la polymérisation du monomère diène conjugué et du méthacrylate de méthyle ont lieu respectivement pendant une durée de 0,5 h à 24 heures et 10 s et 1 heure.

11. Application des copolymères élastomères thermoplastiques obtenus à l'une quelconque des revendications 1 à 10, à la préparation de produits moulés par extrusion ou injection, d'adhésifs sensibles à la pression et d'agents améliorant la résistance au choc et la tenue thermique de polymère de méthacrylate de méthyle, de polystyrène, de polychlorure de vinyle et de polycarbonate.

## Claims

1. Process for preparing, by anionic polymerization, copolymers comprising a block originating from conjugated dienes and at least one polymethyl methacrylate block which has a glass transition temperature higher than or equal to 120°C, characterized in that:
a) the conjugated diene monomer is polymerized with the aid of an anionic initiator to obtain a living polydiene chain unit,
b) a ligand of formula ROM is next added, in which M is an alkali metal and R has the formula R¹(OR²)ₘ in which R¹ is a linear or branched alkyl radical, an arylalkyl or alkylaryl radical, the alkyl group containing from 1 to 6 carbon atoms, R² is a linear or branched alkylene radical containing from 2 to 4 carbon atoms and m is the integer 1, 2 or 3,
c) the living polydiene chain unit of the reaction medium (b) is reacted with methyl methacrylate (MMA) to form a living copolymer,
d) the living copolymer obtained in stage c) is reacted with at least one protonic compound, with the condition that the polymerization of the diene and MMA monomers should take place solely in the presence of apolar solvent.

2. Process in accordance with Claim 1, characterized in that the anionic initiator is mono- or difunctional.

3. Process in accordance with either of Claims 1 and 2, characterized in that α-methylstyrene or diphenylethylene is added in stage a) or b).

4. Process in accordance with any one of Claims 1 to 3, characterized in that butadiene is employed as conjugated diene monomer.

5. Process in accordance with any one of Claims 1 to 4, characterized in that lithium methoxyethanolate or lithium methoxyethoxyethanolate is employed as ligand.

6. Process in accordance with Claim 2, characterized in that the monofunctional initiator employed is a compound chosen from diphenylmethylsodium, diphenylmethylpotassium, diphenylmethyllithium, n-butyllithium, sec-butyllithium, n-butylsodium, 1,1-diphenylhexyllithium and 1,1-diphenyl-3-methylpentyllithium.

7. Process in accordance with Claim 2, characterized in that the difunctional initiator employed is a compound chosen from 1,1,4,4-tetraphenyl-1,4-dilithiobutane, 1,1,4,4-tetraphenyl-1,4-disodiobutane, the product of reaction of an alkyllithium with diisopropenylbenzene, bis(p-isopropenylphenyl)alkanes and 2(n-1)-diphenylalkadienes.

8. Process in accordance with any one of Claims 1 to 7, characterized in that toluene, benzene, ethylbenzene or a mixture of one of the latter with cyclohexane is employed as solvent.

9. Process in accordance with any one of Claims 1 to 8, characterized in that the polymerization of the conjugated diene takes place between 0°C and 100°C and preferably between 0°C and 70°C and the polymerization of methyl methacrylate takes place between -50°C and +60°C and preferably between -30°C and +20°C.

10. Process in accordance with any one of Claims 1 to 9, characterized in that the polymerization of the conjugated diene monomer and of methyl methacrylate take place respectively over a period of 0.5 h to 24 hours and 10 s and 1 hour.

11. Application of the thermoplastic elastomeric copolymers obtained by any one of Claims 1 to 10 to the preparation of products moulded by extrusion or injection, of pressure-sensitive adhesives and of agents improving the impact strength and the thermal resistance of methyl methacrylate polymer, of polystyrene, of polyvinyl chloride and of polycarbonate.

## Patentansprüche

1. Verfahren zur Herstellung von Copolymeren mittels anionischer Polymerisation, die einen Block umfassen, der sich von konjugierten Dienen und wenigstens einem Block Polymethylmethacrylat ableiten, mit einer Glasübergangstemperatur von größer oder gleich 120 °C, dadurch gekennzeichnet, daß man
a) das monomere konjugierte Dien mit Hilfe eines anionischen Initiators polymerisiert, um ein lebendes Polydienkettenglied zu erhalten,
b) dann einen Liganden der Formel ROM hinzugibt, in der M ein Alkalimetall ist und R die Formel R¹(OR²)ₘ besitzt, in der R¹ ein lineares oder verzweigtes Alkylradikal, ein Arylalkylradikal oder ein Alkylarylradikal ist, wobei die Alkylgruppe 1 bis 6 Kohlenstoffatome besitzt, R² ein lineares oder verzweigtes Alkylenradikal mit 2 bis 4 Kohlenstoffatomen und m die ganze Zahl 1, 2 oder 3 ist,
c) das lebende Polydienkettenglied des Reaktionsmediums (b) mit Methylmethacrylat (MMA) reagieren läßt, um ein lebendes Copolymer zu bilden,
d) das in Schritt (c) erhaltene lebende Copolymer mit wenigstens einer protischen Zusammensetzung reagieren läßt mit der Bedingung, daß die Polymerisation des monomeren Diens und MMA nur in Anwesenheit eines apolaren Lösungsmittels stattfindet.

2. Verfahren nach Anspruch 1, dadurch gekennzeichnet, daß der anionische Initiator mono- oder bifunktionell ist.

3. Verfahren nach einem der Ansprüche 1 oder 2, dadurch gekennzeichnet, daß man in Schritt (a) oder (b) α-Methylstyrol oder Diphenylethylen hinzugibt.

4. Verfahren nach einem der Ansprüche 1 bis 3, dadurch gekennzeichnet, daß man als monomeres konjugiertes Dien Butadien verwendet.

5. Verfahren nach einem der Ansprüche 1 bis 4, dadurch gekennzeichnet, daß man als Liganden Lithiummethoxyethanolat oder Lithiummethoxyethoxyethanolat verwendet.

6. Verfahren nach Anspruch 2, dadurch gekennzeichnet, daß man als monofunktionellen Initiator eine Zusammensetzung verwendet, die ausgewählt wird aus Diphenylmethylnatrium, Diphenylmethylkalium, Diphenylmethyllithium, n-Butyllithium, sec.-Butyllithium, n-Butylnatrium, 1,1-Diphenylhexyllithium und 1,1-Diphenyl-3-methylpentyllithium.

7. Verfahren nach Anspruch 2, dadurch gekennzeichnet, daß man als bifunktionellen Initiator eine Zusammensetzung verwendet, die ausgewählt wird aus 1,1,4,4-Tetraphenyl-1,4-dilithiumbutan, 1,1,4,4-Tetraphenyl-1,4-dinatriumbutan, dem Reaktionsprodukt eines Alkyllithiums mit Diisopropenylbenzol, den Bis(p-Isopropenylphenyl)alkanen und den 2(n-1)-Diphenylalkadienen.

8. Verfahren nach einem der Ansprüche 1 bis 7, dadurch gekennzeichnet, daß man als Lösungsmittel Toluol, Benzol, Ethylbenzol oder ein Gemisch einer der letztgenannten mit Cyclohexan verwendet.

9. Verfahren nach einem der Ansprüche 1 bis 8, dadurch gekennzeichnet, daß die Polymerisation des konjugierten Diens zwischen 0 °C und 100 °C stattfindet und vorzugsweise zwischen 0 °C und 70 °C und daß die Polymerisation des Methylmethacrylats zwischen -50 °C und +60 °C stattfindet und vorzugsweise zwischen -30 °C und +20 °C.

10. Verfahren nach einem der Ansprüche 1 bis 9, dadurch gekennzeichnet, daß die Polymerisation des monomeren konjugierten Diens bzw. des Methylmethacrylats während einer Dauer von 0,5 bis 24 Stunden bzw. 10 Sekunden und 1 Stunde stattfindet.

11. Verwendung der nach einem der Ansprüche 1 bis 10 erhaltenen thermoplastischen elastomeren Copolymere zur Herstellung von Formprodukten mittels Extrusion oder Spritzguß zur Herstellung von druckempfindlichen Klebemitteln und zur Herstellung von Mitteln, die die Schlagzähigkeit und die thermische Beständigkeit des Methylmethacrylatpolymeren, des Polystyrols, des Polyvinylchlorids und des Polycarbonats verbessern.
